# EUROPEAN PATENT SPECIFICATION

(11) **EP 1 795 561 B1**
(45) Date of publication and mention of the grant of the patent: **01.09.2010**
(21) Application number: 05778593.3
(22) Date of filing: 06.09.2005
(51) Int. Cl.: C08L 67/04, C08K 3/22, C07K 7/02, C08K 9/00, C08L 101/16

(54) **RESIN COMPOSITION AND MOLDING THEREOF**
HARZZUSAMMENSETZUNG UND FORMKÖRPER DARAUS
COMPOSITION DE RESINE ET MOULAGE DE CELLE-CI

(30) Priority: 24.09.2004 JP 2004278235
(43) Date of publication of application: 13.06.2007
(73) Proprietor: MITSUBISHI PLASTICS, INC., Chiyoda-ku, Tokyo 100-0005 (JP); Sony Corporation, Tokyo 141-0001 (JP)
(72) Inventor: TANAKA, Kazuya;, 8, Mitsuya-cho, Nagahama-shi, Shiga 5268 (JP); NISHIDA, Miki;, 8, Mitsuya-cho, Nagahama-shi, Shiga 5268 (JP); TAKAGI, Jun;, 8, Mitsuya-cho, Nagahama-shi, Shiga 5268 (JP); FUJIHIRA, Yuko, Shinagawa-ku, Tokyo 1410001 (JP); MORI, Hiroyuki, Shinagawa-ku, Tokyo 1410001 (JP); YAMADA, Shinichiro, Shinagawa-ku, Tokyo 1410001 (JP)
(74) Representative: Hayes, Adrian Chetwynd
(86) International application number: PCT/JP2005/016295
(87) International publication number: WO 2006/033229

(56) References cited:
- EP-A- 1 630 195
- GB-A- 2 315 453
- JP-A- 2000 044 704
- JP-A- 2004 190 025

## Description

### TECHNICAL FIELD

The present invention relates to a resin composition derived from a plant material and a molding thereof and more particularly to the resin composition derived from the plant material having a high degree of flame retardance and the molding thereof.

### BACKGROUND ART

Recently plastics are widely used in human lives and many industrial fields. The production amount of the plastic is about 100 million tons a year in the world. The greater part of the plastics is wasted after they are used. It is recognized that the wasted plastics are recognized as one of causes which pollute the environment of the earth. That being the case, an effective utilization of depletive resources is regarded as important in recent years, and the utilization of recyclable resources is an important problem to be solved.
As a solution which attracts public attention most is the utilization of plastics made from plant materials. The plastics are made from the plant materials by utilizing nondepletive resources and capable of saving the depletive resources when they are produced and in addition can be recycled.

Of the plastics made from the plant materials, a lactic acid resin is made from lactic acid obtained by fermentation of starch, is mass-producible in terms of chemical engineering, and excellent in its transparency, rigidity, and heat resistance. Thus as a material replacing polystyrene, polyethylene terephthalate, ABS, and the like, the lactic acid resin attracts public attention and is utilized in various fields such as household appliances, office automation apparatuses, parts of cars, and the like.

Materials which are used for the household appliances, the office automation apparatuses, the parts of cars, and the like are demanded to have excellent flame retardance to prevent occurrence of fire. The polystyrene, the ABS, and the like which have been widely used as materials of a resin molding have a comparatively low degree of flame retardance. Therefore halogen flame-retardant agents, particularly a bromine-containing flame-retardant agent is added to the polystyrene, the ABS, and the like.

But poisonous gases such as dioxines are generated from the halogen-containing flame-retardant agent when the resin molding burns. Thus problems has been raised about the safety in thermal disposal and recycle of the resin molding containing the halogen-containing flame-retardant agent. A phosphorous compound is used as a replacement of the halogen-containing flame-retardant agent. But the phosphorous compound is insufficient in safety and the harmony with environment and further may adversely affect moldability, heat resistance, and the like of the resin molding in its practical use. Therefore the present tendency is to replace the halogen-containing flame-retardant agent with a flame-retardant agent not containing the halogen nor the phosphorous.

That being the case, a metal hydroxide attracts public attention as a flame-retardant agent which does not generate a poisonous gas when a resin molding decomposes. For example, there is proposed impartation of flame retardance to the resin molding by adding 30 wt% to 50 wt% of aluminum hydroxide or magnesium hydroxide to a pellet composed of a biodegradable plastic material (patent document 1). But the proposed method is incapable of imparting a sufficient degree of flame retardance to the resin molding and causes a cinder to drip when the resin molding burns. Thus this method has a possibility of not providing the resin molding with flame retardance to such a high extent that the resin molding satisfies the V-0 standard or the VTM-0 standard in a vertical flame test UL94.

Patent document 1: Japanese Patent Application Laid-Open No.8-252823

### PROBLEMS TO BE SOLVED BY THE INVENTION

When the metal hydroxide is merely added to the biodegradable plastic material, as described above, the cinder may drip when the resin molding burns. Therefore it is difficult for the resin molding to have flame retardance which always satisfies the V-0 standard or the VTM-0 standard in the 94 vertical flame test UL94.
The present invention has been made in view of the above-described problems. It is an object of the present invention to provide a resin composition, derived from a plant material, which has flame retardance to such a high extent that the resin composition satisfies the V-0 standard or the VTM-0 standard in the vertical flame test UL94 by using a simple art and provide a molding of the resin composition.

### MEANS FOR SOLVING THE PROBLEMS

The present inventors have repeated experiments of adding various materials to a composition composed of a lactic acid resin and a metal hydroxide to evaluate the flame retardance of a molding of the obtained composition. As a result, they have found that by further adding a natural fiber or a fiber derived from a natural material as a material to the composition composed of the lactic acid resin and the metal hydroxide, it is possible to effectively prevent a cinder from dripping when the molding burns. In this manner, they have completed the present invention.

The present invention provides a resin composition comprising 100 parts by mass of a lactic acid resin (A), 50 to 100 parts by mass of a metal hydroxide (B), and 0.1 to 30 parts by mass of a fiber (C), wherein the fiber (C) is a natural fiber or/and a fiber derived from a natural material and wherein a surface of the metal hydroxide (B) is treated with a silane coupling agent, titanic acid or fatty acid.
When a molding of the resin composition containing the natural fiber or/and the fiber derived from the natural material burns, the fiber is carbonized by heat. A carbide formed in the carbonization of the fiber has an action of preventing the cinder from dripping. Thus the cinder does not drip. Therefore the molding satisfies the V-0 standard or the VTM-0 standard in the vertical flame test UL94.
It is preferable that the natural fiber or/and the fiber derived from the natural material are combustible. The more combustible are the natural fiber or/and the fiber derived from the natural material, the more easily the carbonization thereof progresses. The resin composition containing these fibers has a comparatively low melting viscosity and is not inhibited by the fibers in the moldability thereof.

A film derived from the silane coupling agent, the titanic acid or the fatty acid is formed on the surface of the surface-treated metal hydroxide. The surface treatment prevents the lactic acid resin from decomposing, improves the dispersibility of the metal hydroxide, and improves the flame retardance of the resin composition and that of the molding to a higher extent.

As the metal hydroxide (B), it is possible to use a metal hydroxide such as aluminum hydroxide, magnesium hydroxide, and the like capable of imparting flame retardance to the resin composition and the molding thereof without limiting the metal hydroxide (B) to a specific metal hydroxide. The aluminum hydroxide can be most favorably used. The aluminum hydroxide is lower than other metal hydroxides in the cost thereof and makes an endothermic reaction at a lower temperature than other metal hydroxides. Thus the aluminum hydroxide is a flame-retardant agent suitable for making the lactic acid resin flame-retardant.

The present invention provides an injection molding made of the above-described resin composition and a resin molding consisting of a film, a sheet or a plate made of the resin composition.
Because the resin composition of the present invention has a low melting viscosity, it can be injection-molded. Thus the resin composition can be formed into various injection moldings. The resin composition of the present invention can be molded by molding methods other than the injection molding. For example, the resin composition of the present invention can be molded by extrusion molding.

The film is defined in JIS K 6900 as "a thin and flat product which has a thickness, much smaller than its length and width, whose maximum thickness is arbitrarily limited and is provided in the form of a roll". The sheet is defined in JIS K 6900 as "a thin and flat product having a thickness smaller than its length and width".
As described above, the film and the sheet are not clearly distinguished from each other. Thus in the present invention, the film is defined as a product having an average thickness less than 200µm, the sheet is defined as a product having an average thickness not less than 200µm and less than 500µm, and the plate is defined as a product having an average thickness not less than 500µm. It is preferable that the film is stretched at least in one direction. The above-described thickness of the film is the thickness after it is stretched.

The above-described molding is allowed to be flame-retardant to such an extent that it satisfies the V-0 standard or the VTM-0 standard in a vertical flame test UL94V or UL94VTM provided in the safety standard UL94. That is, because the film, the sheet, and the plate which are the molding of the resin composition of the present invention have excellent flame retardance, they can be used for applications such as household appliances, office automation apparatuses, parts of cars, and the like demanded to have a high degree of flame retardance.

The vertical flame test UL94 which is one of UL standards of U.S.A. and belongs to the most severe category of all the flame retardance standards is an index for judging the practicability of a material. The level of the V-0 or that of the VTM-0 indicates that the material has a high degree of flame retardance. The level of V-1, VTM-1, V-2, and VTM-2 indicates that the material has a comparatively high degree of flame retardance, whereas a level not reaching the level of V-2 and VTM-2 is recognized that the material has an insufficient degree of flame retardance.

### EFFECT OF THE INVENTION

According to the present invention, it is possible to provide the molding made of the resin composition having a high degree of flame retardance which cannot be obtained by the conventional resin composition in which only the metal hydroxide is added to the lactic acid resin. More specifically, the molding of the present invention has flame retardance to such a high extent that molding satisfies the V-0 standard or the VTM-0 standard in the vertical flame test UL94V or UL94VTM provided in the safety standard UL94. Therefore the resin composition of the present invention can be used for various fields such as household appliances, office automation apparatuses, parts of cars, and the like demanded to have a high degree of flame retardance.
To realize such a high degree of flame retardance, the natural fiber or/and the fiber derived from the natural material are added to the resin composition. But the addition thereof does not inhibit th moldability of the resin composition.

Further because the resin composition of the present invention is derived from the plant material, the resin composition is biodegradable. Thus even though the resin composition is wasted, it does not adversely affect a natural environment. Because the present invention widens the range in which the resin derived from the plant material is applied, the resin composition of the present invention is capable of saving the depletive resources in a larger amount than the conventional resin composition.

### BEST MODE FOR CARRYING OUT THE INVENTION

The embodiment of the present invention is described below.
The resin composition of the present invention contains a lactic acid resin (A), a metal hydroxide (B), and a fiber (C). The above-described fiber (C) is a natural fiber or/and a fiber derived from a natural material.
Describing the mixing amount of the resin composition, 50 to 100 parts by mass of the metal hydroxide (B) and 0.1 to 30 parts by mass of the fiber (C) are mixed with 100 parts by mass of the resin composition (A).
Each of the above-described components (A), (B), and (C) is described in detail below.

### • Lactic acid resin

The lactic acid resin used in the present invention includes poly(L-lactic acid) having L-lactic acid as its structure unit, poly(D-lactic acid) having D-lactic acid as its structure unit, poly(DL-lactic acid) having the L-lactic acid and the D-lactic acid as its structure unit, and mixtures thereof. The lactic acid resin of the present invention may include a copolymer of the lactic acid resin with α-hydroxy-carboxylic acid or with diol/dicarboxylic acid.

It is favorable that as the DL structure (mol ratio between the structure of the D-lactic acid and the structure of lactic acid), the L-lactic acid : the D-lactic acid = 100:0 to 90:10 or the L-lactic acid : the D-lactic acid = 0:100 to 10:90. When the mol ratio is out of the above-described range, the crystallizability of the lactic acid resin is low. Thus it is difficult to provide a product formed by molding the lactic acid resin having a low crystallizability with a high heat resistance. Thus there may be a limitation in the use of the product. It is more favorable that the L-lactic acid: the D-lactic acid = 99.5:0.5 to 94:6 or the L-lactic acid : the D-lactic acid = 0.5:99.5 to 6:94.

It is also possible to use a plurality of the lactic acid resins having different DL structures by mixing them with each other. In that case, it is preferable that each of a plurality of the lactic acid resins has the DL structure in the above-described range or that an average of the mixture of the lactic acid resins has the DL structure in the above-described range. For example, by mixing the homopolymer of the L-lactic acid or that of the D-lactic acid with the copolymer of the L-lactic acid and the D-lactic acid, it is possible to prevent a resulting resin composition from bleeding and control the balance in the heat resistance thereof.

As representatives of the lactic acid resin which can be preferably used in the present invention, "LACEA (commercial name)" series produced by Mitsui Chemical Inc. and "Nature Works (commercial name)" series produced by Cargill Dow LLC. are listed.

As a method of polymerizing the lactic acid resin, it is possible to adopt any of known methods such as condensation polymerization, ring opening polymerization, and the like. For example, in the condensation polymerization, it is possible to obtain a lactic acid resin having an arbitrary composition by direct dehydration condensation polymerization of the L-lactic acid, the D-lactic acid or a mixture thereof.

It is also possible to obtain a lactic acid resin by means of the ring opening polymerization of lactides which are cyclic dimers of the lactic acid by using a selected catalyst and a polymerization-adjusting agent as necessary. As the lactides, L-lactide which is the dimer of the L-lactic acid, D-lactide which is the dimer of the D-lactic acid, and DL-lactide consisting of the L-lactic acid and the D-lactic acid can be used. In the ring opening polymerization, these lactides are mixed and polymerized with each other as necessary. Thereby it is possible to obtain the lactic acid resin having a given composition and crystallizability.

Further when it is necessary to improve the heat resistance of the lactic acid resin, a small amount of a copolymerization component may be used for the lactic acid resin in a range in which the essential property of the lactic acid resin is not reduced, namely, in the range in which the mixture contains not less than 90 wt% of the lactic acid resin component.
As the copolymerization component, non-aliphatic dicarboxylic acid such as terephthalic acid and non-aliphatic diol such as an adduct of ethylene oxide with bisphenol A are listed. In addition, hydroxy-carboxylic acids (preferably α-hydroxy-carboxylic acid) other than the lactic acid, aliphatic diol, and aliphatic dicarboxylic acid may be used as the copolymerization component. These copolymerization components may be used singly or in combination of a plurality thereof.

As other hydroxy-carboxylic acids which are used as the copolymerization component of the lactic acid resin, it is possible to list bifunctional aliphatic hydroxy-carboxylic acids such as glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, and 2-hydrocycaproic acid; and lactones such as caprolactone, butyrolactone, and valerolactone.

As the aliphatic diol which is used as the copolymerization component of the lactic acid resin, ethylene glycol, 1,4-butanediol, and 1,4-cyclohexanedimethanol are listed.
As the aliphatic dicarboxylic acid which is used as the copolymerization component of the lactic acid resin, succinic acid, adipic acid, suberic acid, sebacic acid, and dodecanedioic acid are listed.

A small amount of a chain-extending agent may be used to increase the molecular weight of the lactic acid resin. As the chain-extending agent, it is possible to use a diisocyanate compound, an epoxy compound, an acid anhydride, and the like.

The range of the weight-average molecular weight of the lactic acid resin is favorably in the range from 50,000 to 400,000 and more favorably in the range from 100,000 to 250,000. When the weight-average molecular weight thereof is below 50,000, the resin composition has little property suitable for practical use. When the weight-average molecular weight thereof is above 400,000, the melting viscosity of the resulting resin composition is so high that the moldability thereof is inferior.

In a range in which the effect of the present invention is not reduced, the resin composition of the present invention may contain resin components shown below. As representatives of the resin components that are shock-resistant and have moldability-improving effect, aliphatic polyester other than the lactic acid resin, aromatic aliphatic polyester, and the copolymer of diol, carboxylic acid, and the lactic acid resin are listed.

### • Aliphatic polyester other than lactic acid resin

As the aliphatic polyester other than the lactic acid resin, it is possible to list the aliphatic polyester except the lactic acid resin. It is possible to exemplify (i) polyhydroxy-carboxylic acid except the lactic acid resin, (ii) aliphatic polyester obtained by condensation of the aliphatic diol and aliphatic dicarboxylic acid, (iii) aliphatic polyester obtained by ring opening polymerization of cyclic lactones, (iv) synthetic aliphatic polyester, and (v) aliphatic polyester biosynthesized in bacteria.

As the above-described polyhydroxy-carboxylic acid (i), it is possible to list homopolymers and copolymers of hydroxy-carboxylic acids such as 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, and 2-hydrocycaproic acid.

As the above-described aliphatic polyester (ii) obtained by condensing the above-described aliphatic diol and the above-described aliphatic dicarboxylic acid, it is possible to list polymers by condensing one kind or not less than two kinds selected from among aliphatic diol and aliphatic dicarboxylic acid which will be described later or by jumping up the molecular weight thereof with an isocyanate compound as necessary.
As representative aliphatic diol, it is possible to list ethylene glycol, propylene glycol, 1,4-butanediol, and 1,4- cyclohexanedimethanol. As representative aliphatic dicarboxylic acid, it is possible to list succinic acid, adipic acid, suberic acid, sebacic acid, and dodecanedioic acid.

As the above-described representative aliphatic polyester (iii) obtained by the ring opening polymerization of the cyclic lactones, it is possible to list polymers produced by the ring opening polymerization of cyclic monomer such as ε -caprolactone, δ-valerolactone, and β-methyl-δ-valerolactone. The cyclic monomer can be used singly or by copolymerizing a plurality of selected cyclic monomers.

As the above-described synthetic aliphatic polyester (iv), it is possible to list the copolymer of cyclic acid anhydride and oxiranes. It is possible to exemplify the copolymer of succinic anhydride and ethylene oxide and copolymers of the succinic anhydride and propione oxide and the like.

As the aliphatic polyester (v) biosynthesized in bacteria, it is possible to list aliphatic polyester biosynthesized in bacteria such as alcaligenes eutrophus with acetyl coenzyme A (acetyl CoA). The aliphatic polyester is composed mainly of poly-β-hydroxybutyric acid (poly3HB). To improve the property suitable for practical use, it is industrially advantageous to copolymerize the aliphatic polyester and a valerianic acid unit (HV) with each other to form a copolymer of poly(3HB-CO-3HV). The copolymerization ratio of the HV is in the range of 0 to 40 mol%. Hydroxyalkanoate having a long chain may be copolymerized with the aliphatic polyester.

As representative aliphatic polyesters other than the lactic acid resin, it is possible to commercially obtain "BIONOLLE (commercial name)" series, produced by Showa Highpolymer Co., Ltd, which is obtained by polymerizing succinic acid, 1,4-butanediol, and adipic acid with each other. It is also possible to commercially obtain "CELGREEN (commercial name)" series, produced by Daicel Chemical Industries, Ltd., which is obtained by ring opening condensation of ε-caprolactone.

### • Aromatic aliphatic polyester

It is possible to use the aromatic aliphatic polyester having a decreased degree of crystallizability obtained by introducing an aromatic ring between aliphatic chains. For example, the aromatic aliphatic polyester is obtained by condensing aromatic dicarboxylic acid, aliphatic dicarboxylic acid, and aliphatic diol.

As the above-described aromatic dicarboxylic acid, isophthalic acid, terephthalic acid, and 2,6-naphthalene dicarboxylic acid are listed. The terephthalic acid is most favorably used. As the aliphatic dicarboxylic acid, succinic acid, adipic acid, suberic acid, sebacic acid, and dodecanedioic acid are listed. As the aliphatic diol, ethylene glycol, 1,4-butanediol, and 1,4-cyclohexanedimethanol, and the like are listed. The 1,4-butanediol is most favorably used. Two kinds or more of each the aromatic dicarboxylic acid, the aromatic dicarboxylic acid, and the aliphatic diol may be used.

As representatives of the aromatic aliphatic polyesters, the copolymer of tetramethylene adipate and terephthalate and the copolymer of polybutylene adipate and the terephthalate are listed. As the copolymer of the tetramethylene adipate and the terephthalate, it is possible to commercially obtain "Eastar Bio (commercial name)" produced by Eastman Chemical Company. As the copolymer of the polybutylene adipate and the terephthalate, it is possible to commercially obtain "Ecoflex (commercial name)" produced by BASF Corporation.

### • Copolymer of lactic acid resin, diol, and dicarboxylic acid

As the structure of the copolymer of the lactic acid resin, the diol, and the dicarboxylic acid, a random copolymer, a block copolymer, and a graft copolymer are listed. The copolymers having any of these structures can be used. But from the standpoint of improving the shock resistance and transparency of the molding of the resin composition, the block copolymer and the graft copolymer are preferable. As an example of the random copolymer, "GS-Pla (commercial name)" series produced by Mitsubishi Chemical Co., Ltd. can be used. As an example of the block copolymer or the graft copolymer, "Plamate (commercial name)" series produced by Dainippon Ink and Chemicals, Incorporated. can be used.

The method of producing the copolymer of the lactic acid resin, the diol, and the dicarboxylic acid is not limited to a specific method. A method of obtaining the copolymer of the lactic acid resin, the diol, and the dicarboxylic acid by the ring opening polymerization or an ester exchange reaction of polyester or polyether polyol having a structure formed by dehydration condensation of diol and carboxylic acid with lactide is used. In addition, a method of obtaining the copolymer of the lactic acid resin, the diol, and the dicarboxylic acid by dehydration deglycol condensation or the ester exchange reaction of the polyester or the polyether polyol having the structure formed by the dehydration condensation of the diol and the carboxylic acid with the lactic acid resin is used.

Although the above-described diol is not limited to specific diols, as the diol, it is possible to list straight-chain diols such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol; branch-chain diol such as propylene glycol, 1,2-butanediol, 1,3-butanediol, 1,2-pentanediol, 1,3-pentanediol, 1,4-pentanediol, 2,3-pentanediol, 2,4-pentanediol, 1,2-hexanediol, 1,3-hexanediol, 1,4-hexanediol, 1,5-hexanediol; and polyols such as polyethylene glycol, polypropylene glycol, polybutylene glycol, polytetramethylene glycol, and the like.

Although the above-described dicarboxylic acid is not limited to specific dicarboxylic acids, as the dicarboxylic acid, it is possible to list straight-chain dicarboxylic acids such as succinic acid, adipic acid, suberic acid, azelaic acid, sebacic acid, nonanedicarboxylic acid, decanedicarboxylic acid, maleic acid, fumaric acid, citraconic acid, dodecanedicarboxylic acid, cyclohexanedicarboxylic acid; branched dicarboxylic acid such as methylsuccinic acid, dimethylsuccinic acid; ethylsuccinic acid, 2-methylglutaric acid, 2-ethylglutaric acid, 3-methylglutaric acid, 3-ethylglutaric acid, 2-methyladipic acid, 2-ethyladipic acid, 3-methyladipic acid, 3-ethyladipic acid, and methylglutaric acid; and aromatic dicarboxylic acid.such as phthalic acid, isophthalic acid, terephthalic acid, hexahydrophthalic acid, naphthalenedicarboxylic acid, and phthalic anhydride.

The molecular weight of the copolymer of the lactic acid resin, the diol, and the dicarboxylic acid can be adjusted to a predetermined molecular weight by using an isocyanate compound or carboxylic anhydride. In terms of processability and durability, the weight-average molecular weight of the copolymer of the lactic acid resin, the diol, and the dicarboxylic acid is favorably in the range of 50,000 to 300,000 and more favorably in the range of 100,000 to 250,000.

### • Metal hydroxide

As examples of the metal hydroxide (B) which is used in the present invention, aluminum hydroxide, magnesium hydroxide, calcium aluminate hydrate, tin oxide hydrate, and phlogopite are listed. It is especially preferable to use the aluminum hydroxide in consideration of flame-retardant effect and cost.

It is preferable that the above-described metal hydroxide is used in the form of particle having an average diameter in the range of 0.1 to 10µm. By mixing the metal hydroxide having the above-described average particle diameter with the lactic acid resin, it is possible to minimize the deterioration of the mechanical strength of the molding. It is currently impossible to obtain the metal hydroxide having the average particle diameter below 0.1µm. It is supposed that when the average particle diameter of the metal hydroxide is less than 0.1µm, the mechanical strength of the resin composition decreases owing to condensation and defective dispersion of the metal hydroxide. On the other hand, when the average particle diameter of the metal hydroxide exceeds 10µm, the moldability of the resin composition deteriorates, the strength of the molding decreases, and the sliding performance of particle deteriorates. The average particle diameter of the metal hydroxide is more favorably in the range of 0.5 to 8µm and most favorably in the range of 1 to 5µm.
It is to be noted that the average particle diameter indicates a value measured by means of a laser diffraction method.

It is preferable that the metal hydroxide is surfaced-treated with a surface-treating agent to form a film thereon. By surface-treating the metal hydroxide, it is possible to enhance the dispersibility of the metal hydroxide, suppress the deterioration of the mechanical strength of the resin composition, and improve the flame retardance thereof, and further suppress a decrease of the molecular weight thereof when the metal hydroxide is mixed with the resin, when the resin composition is molded into an injection molding, and when the injection molding is practically used.

As the surface-treating agent, a silane coupling agent such as epoxy silane, vinyl silane, methacrylic silane, amino silane, isocyanate silane; titanic acid; and fatty acid are listed. Of these surface-treating agents, the epoxy silane coupling agent is preferably used because it has a high degree of dispersibility and the effect of imparting flame retardance to the resin composition.

It is preferable that 0.1 to 10 parts by mass of the surface-treating agent is mixed with 100 parts by mass of the metal hydroxide. Although the method of surface-treating the metal hydroxide is not limited to a specific method, the surface treatment can be accomplished by adding the surface-treating agent to the metal hydroxide at a normal temperature or to the heated metal hydroxide and mixing the surface-treating agent and the metal hydroxide with each other.
Effect can be obtained to some extent by using the metal hydroxide normally without adding the surface-treating agent thereto and adding the surface-treating agent to the resin composition when the resin composition is compounded.

50 to 100 parts by mass of the metal hydroxide (B) is added to 100 parts by mass of the lactic acid resin (A). By setting the mixing amount of the metal hydroxide (B) to the above-described range, without damaging the shock resistance and moldability of the resin composition, the metal hydroxide is capable of imparting flame retardance to the lactic acid resin and does not decrease the degree of the sliding property of a film or a sheet made of the molding of the resin composition. When the mixing amount of the metal hydroxide (B) for 100 parts by mass of the lactic acid resin is less than 50 parts by mass, a desired degree of flame retardance is not obtained. When the mixing amount of the metal hydroxide (B) for 100 parts by mass of the lactic acid resin is more than 100 parts by mass, the moldability of the resin composition is damaged and the sliding property of the molding deteriorates. It is more favorable that the mixing amount of the metal hydroxide (B) for 100 parts by mass of the lactic acid resin is in the range from 60 to 80 parts by mass.

It is possible to improve the flame-retardant efficiency by adding a flame-retardant assisting agent to the lactic acid resin in addition to the metal hydroxide (B).
As examples of the flame-retardant assisting agent, it is possible to list metal compounds such as zinc stannate, zinc borate, iron nitrate, copper nitrate, and metal salts of sulfonic acid; phosphorous compounds such as red phosphorus, high-molecular-weight phosphate, phosphazene, and the like; nitrogen compounds such as melamine cyanurate, and the like; and compounds of nitric acid such as ammonium nitrate are listed. When the flame-retardant agent is added to the lactic acid resin, it is preferable that 0.1 to 30 parts by mass of the flame-retardant assisting agent is added to 100 parts by mass of the lactic acid resin.

### • Natural fiber

The fiber (C) which is used in the present invention includes a natural fiber and a fiber derived from a natural material.
As the natural fiber, flax, jute, kenaf, bagasse, corn fiber, bamboo fiber, wool, and the like are listed. As the fiber derived from the natural material, rayon, biscose, acetate, and the like are listed. These fibers carbonize when the molding burns, thus suppressing dripping of a cinder. The more combustible are these fibers, the more easily carbonization thereof progresses. It is preferable that the fiber carbonizes at 400°C to 600°C.

By mixing 0.1 to 30 parts by mass of the fiber (C) with 100 parts by mass of the lactic acid resin, the resin composition is capable of achieving flame retardance at a level at which the resin composition satisfies the V-0 standard or the VTM-0 standard in the vertical flame test UL94 without deteriorating the moldability thereof. When the mixing amount of the fiber is less than 0.1 parts by mass for 100 parts by mass of the lactic acid resin, the resin composition is incapable of achieving flame retardance at a high level at which the resin composition satisfies the V-0 standard or the VTM-0 standard.
The mixing amount of the fiber (C) is more favorably in the range from 1 to 15 parts by mass and most favorably in the range from 2 to 10 parts by mass for 100 parts by mass of the lactic acid resin.

The average fibrous length of the fiber (C) is favorably in the range from 1.0 to 10.0mm. If the average fibrous length thereof is below 1.0mm, fibers interlock with one another to a low extent. Thus the drip-preventing effect is low. On the other hand, if the average fibrous length thereof is above 10.0mm, it is difficult for the fiber (C) to uniformly disperse.

The resin composition of the present invention is capable of containing additives shown below in the range in which the additives do not deteriorate the effect of the present invention. A representative additive is a carbodiimide compound imparting durability to the resin composition. As additives other than the carbodiimide compound, a heat stabilizer, an antioxidant, a UV absorber, a plasticizer, a nucleating additive, a light stabilizer, a pigment, a dye, and the like are listed.

### • Carbodiimide compound

From the standpoint of allowing the injection molding to be resistant to hydrolyzing and improving the durability thereof, it is favorable to use 0.1 to 10 parts by mass of the carbodiimide compound and more favorable 1 to 5 parts by mass thereof for 100 parts by mass of the resin composition. If the mixing amount of the carbodiimide compound is below 0.1 parts by mass, the carbodiimide compound is incapable of allowing the molding of the resin composition to be durable. On the other hand, if the mixing amount of the carbodiimide compound is above 10 parts by mass, the molding is soft and has a low heat resistance.

As the carbodiimide compound which is used in the present invention, aromatic carbodiimide compound is preferable. The aliphatic carbodiimide compound has a sufficient effect of providing the injection molding with the resistance to the hydrolyzing. But the aromatic carbodiimide compound provides the injection molding with the resistance to the hydrolyzing more effectively than the aliphatic carbodiimide compound.

The carbodiimide compound has a basic structure shown by the following general formula:

-(N=C=N-R-)n-

In the above-described formula, n denotes integers not less than 1. Normally n is in the range from 1 to 50. R denotes an organic bonding unit. R of the carbodiimide compound may consist of any of aliphatic, alicyclic, and aromatic bonding units.

As examples of the carbodiimide compound, it is possible to list bis(dipropylphenyl)carbodiimide, poly(4,4'-diphenylmethanecarbodiimide), poly(p-phenylenecarbodiimide), poly(m-phenylenecarbodiimide), poly(tolylcarbodiimide), poly(diisopropylphenylenecarbodiimide), poly(methyl-diisopropylphenylenecarbodiimide), poly(triisopropylphenylenecarbodiimide) or monomers of these carbodiimide compounds. The carbodiimide compound may be used singly or in combination of not less than two kinds thereof.

The resin composition of the present invention can be used by processing it into a film, a sheet, a plate or the like by carrying out various molding methods. The film and the sheet are flat materials. But the plate includes the flat material and a stereo-structure including a three-dimensional structure. The method of forming the film and the like is described below by exemplifying a molding method.

Initially the lactic acid resin (A), the metal hydroxide (B), the natural fiber (C) or/and the fiber (C) derived from the natural material, other resin components, and additives to be added as necessary are mixed with one another. When extrusion molding or injection molding is performed, mixing is carried out by supplying all components to a material supply opening formed on an extrusion molding machine or an injection molding machine. After the components are kneaded in the molding machine or after they are mixed with one another at a portion disposed immediately forward from a extrusion opening, the mixture is directly extruded to an injection molding die or an extrusion molding die to mold the mixture into a predetermined configuration in the die. Alternatively, dry-blended components are extruded in the shape of a strand by using a twin screw extruder to form a pellet. Thereafter the pellet is extruded into the injection molding die or the extrusion molding die to mold the pellet into a predetermined configuration. In both methods, it is necessary to consider a decrease of the molecular weight owing to decomposition of the components. But it is preferable to select the latter method to uniformly mix the components.

More specifically, after the metal hydroxide (B), the natural fiber or/and the fiber (C) derived from the natural material, and other components to be added to the lactic acid resin as necessary are sufficiently dried to remove water therefrom, they are melted and mixed with one another and extruded in the shape of a strand with a twin screw extruder to form a pellet. At this time, considering that the melting point of the lactic acid resin changes according to the mol ratio (DL structure) between the L-lactic acid structure and the D-lactic acid structure and that the viscosity of the resin composition changes according to a mixing ratio between the components, it is preferable to appropriately select a melting extruding temperature. Actually, a temperature range from 160 to 230°C is normally selected.

After the pellet formed by carrying out the above-described method is sufficiently dried to remove water therefrom, injection molding or extrusion molding is performed by carrying out the following method to form the sheet or the plate. By stretching the sheet, the film is formed. A stereo-structure material having a three-dimensional structure is directly formed by the injection molding or a sheet or a flat plate formed in a predetermined thickness by extrusion molding is molded into a required stereo-structure by using a press method or a T die cast method.
In the present invention, as described previously, the molding having a thickness less than 200µm is defined as the film. The molding having a thickness not less than 200µm and less than 500µm is defined as the sheet. The molding having a thickness more than 500µm is defined as the plate.

The injection molding method is not restricted to a specific method. But representatively, injection molding methods such as a general injection molding method, a gas assist molding method, and an injection compression molding method all for thermoplastic resin are used. In addition to the above-described methods, according to an object, it is possible to adopt an in-mold molding method, a gas press molding method, a two-color molding method, a sandwiching molding method, a push-pull method, a SCORIM (Shear Controlled Orientation in Injection Molding).

The film is formed by stretching a sheet obtained by extrusion molding in at least one direction by using a film-stretching method. An arbitrary method is adopted in the film-stretching method. For example, it is possible to adopt a roll stretching method, a tenter stretching method, a tubular method, and an inflation method.

When a stretched film is formed by the above-described tenter method, the components of the composition are pre-compounded with a same-direction twin screw extruder, a kneader, a Henschel mixer or the like. Alternatively each component may be dry-blended and directly supplied to a film extruder.
In producing the biaxially oriented film, there are a sequential biaxial stretching method having the step of bringing the film into contact with heating rollers by using an infrared heater in combination with the heating rollers as necessary to vertically stretch the film owing to a peripheral-speed difference between the heating rollers and the step of guiding the film to a heating oven with the film being held by a clip operating on a rail to stretch and thermally treat the film; and a simultaneous biaxial stretching method of simultaneously stretching the film longitudinally and widthwise, with a clip which holds the film being accelerated longitudinally and extended widthwise.
As the condition of stretching the film made of the lactic acid resin, to prevent the occurrence of troubles such as breakage, whitening, and draw-down of the film, it is preferable to adjust the temperature of the film to 20 to 40°C and the stretch the film 1.5 to 5 times larger than the original dimension at least mono-axially.
The film may be thermally treated with its width fixed after it is heated in the heating oven to stretch it. It is preferable that the thermal treating condition is set to 135 to 160°C and one second to 5 minutes.
In the present invention, by appropriately setting the ratio between the D-lactic acid and the L-lactic acid of the polylactic acid, selecting the kind of components other than the three components (A), (B), and (C) and the mixing amount thereof, and appropriately setting conditions in the stretching and heat-treating steps, it is preferable to set the heating contraction percentage in the longitudinal and widthwise directions of the film to not more than 10%. By setting the heating contraction percentage in the condition of 120°C × 15 minutes to not more than 10%, it is possible to maintain the heat resistance (thermal dimensional stability) and prevent the film from contracting, waving, curling, and so on when the film is practically used as a product.

Because the molding made of the resin composition of the present invention is excellent in its flame retardance, it satisfies the V-0 standard or the VTM-0 standard in the vertical flame test UL94V or UL94VTM provided in the safety standard UL94. Such a high degree of the flame retardance of the molding cannot be achieved by a conventional resin composition in which only the metal hydroxide is added to the lactic acid resin.
Therefore the resin composition of the present invention, the injection molding thereof, the film, the sheet, and the plate can be used in a wide range as insulating members of household appliances, interior parts of cars, building materials, office automation apparatuses, and the like.

The present invention is described in detail below based on examples of the present invention and comparison examples. The present invention is not limited by the examples that are described below.
The components of the resin composition of each of the examples and the comparison examples and the mixing amounts of the components are shown in tables 1 and 2. The unit of the numerical values showing the mixing amounts of the components is part by mass.

In each of the examples and the comparison examples, the flame retardance was evaluated by the following method.

### • Flame retardance

Based on the procedure of the vertical flame test provided in the safety standard UL94 of Underwriters Laboratories Inc., a flame test was conducted at n = 5 (number of samples: 5). Based on the judgement standard of the UL94 vertical flame test (UL94 or ULVTM), samples which satisfied the V-0 standard, VTM-0 standard were evaluated as acceptable. As the sample, in the UL94V, specimens each having a length of 125mm × a width of 13mm × a thickness of 1.5mm were used. In the UL94VTM, specimens each having a length of 200mm × a width of 50mm × a thickness of 0.2mm were used.

| | Example 1 | Example 2 | Example 3 | Example 4 | Example 5 | Example 6 | Example 7 | Example 8 | Example 9 |
|---|---|---|---|---|---|---|---|---|---|
| Lactic acid resin (A) | 100 | 100 | 100 | 100 | 100 | 100 | 100 | 100 | 100 |
| Metal hydroxide (B) | 50 | 75 | 100 | 75 | 75 | 75 | 75 | 75 | 75 |
| Kenaf fiber | 3 | 3 | 3 | | | 10 | 25 | 3 | 3 |
| Flax plant fiber | | | | 3 | | | | | |
| Bamboo fiber | | | | | 3 | | | | |
| Thickness (µm) | 400 | 400 | 400 | 400 | 400 | 400 | 400 | 100 | 1000 |
| Flame retardance (UL94V,VTM) | V-0 | V-0 | V-0 | V-0 | V-0 | V-0 | V-0 | VTM-0 | V-0 |

**[Table 2]**

| | Comparison example 1 | Comparison example 2 | Comparison example 3 | Comparison example 4 |
|---|---|---|---|---|
| Lactic acid resin (A) | 100 | 100 | 100 | 100 |
| Metal hydroxide (B) | | 100 | | 75 |
| Kenaf fiber | | | 25 | |
| Glass fiber | | | | 3 |
| Thickness (µm) | 400 | 400 | 400 | 400 |
| Flame retardance (UL94V,VTM) | Nonstandard | V-2 | Nonstandard | V-2 |

The components shown in tables 1 and 2 are as shown below:
- Lactic acid resin (A): "Nature Works 4032D (commercial name)" produced by Cargill Dow LLC., (DL structure: L-lactic acid/D-lactic acid = 98.6/1.4, weight-average molecular weight: 200,000)
- Metal hydroxide (B): "Epoxy Silane Coupling Treatment BF013ST (commercial name)" (aluminum hydroxide having an average diameter of 1µm was surface-treated with epoxy silane coupling agent)produced by Nippon Light Metal Co., Ltd.
- Kenaf fiber: produced by OG Corporation. (average fiber length: 2mm)
- Flax plant fiber: produced by Teikoku Sen-i Co., Ltd. (average fiber length: 2mm)
- Bamboo fiber: produced by OG Corporation. (average fiber length: 2mm)
- Glass fiber: produced by Nippon Sheet Glass Co.,Ltd. (average fiber length: 2mm)

### • Example 1

As the lactic acid resin (A), "Nature Works 4032D" produced by Cargill Dow LLC. was used. As the metal hydroxide (B), "Epoxy Silane Coupling Treatment BF013ST" produced by Nippon Light Metal Co., Ltd. was used. As the natural fiber (C), the kenaf fiber produced by OG Corporation was used. After a mixture of 100 parts by mass of the lactic acid resin (A), 50 parts by mass of the epoxy silane coupling treatment BF013ST, and 3 parts by mass of the kenaf fiber was dry blended, the dry-blended mixture was supplied to a 25mmφ same-direction twin screw extruder (manufactured by Technovel Corporation) to melt and knead it at 200°C. A composition which resulted from the kneading was extruded from a head. Thereafter the composition was rapidly cooled with a casting roll having a temperature of 43°C to form a sheet having a thickness of 400µm. The flame retardance (UL94V) of the obtained sheet was evaluated. Table 1 shows the result.

### • Example 2

Except that the mixing amount of the epoxy silane coupling treatment BF013ST was changed to 75 parts by mass, a sheet was made by carrying out a method similar to that of the example 1.
More specifically, after a mixture of 100 parts by mass of the lactic acid resin (A), 75 parts by mass of the epoxy silane coupling treatment BF013ST, and 3 parts by mass of the kenaf fiber was dry blended, a sheet having a thickness of 400µm was made by carrying out a method similar to that of the example 1. The flame retardance (UL94V) of the obtained sheet was evaluated. Table 1 shows the result.

### • Example 3

Except that the mixing amount of the epoxy silane coupling treatment BF013ST was changed to 100 parts by mass, a sheet was made by carrying out a method similar to that of the example 1.
More specifically, after a mixture of 100 parts by mass of the lactic acid resin (A), 100 parts by mass of the epoxy silane coupling treatment BF013ST, and 3 parts by mass of the kenaf fiber was dry blended, a sheet having a thickness of 400µm was made by carrying out a method similar to that of the example 1. The flame retardance (UL94V) of the obtained sheet was evaluated. Table 1 shows the result.

### • Example 4

Except that the flax plant fiber produced by Teikoku Sen-i Co., Ltd. was used as the natural fiber (C), a sheet was made by carrying out a method similar to that of the example 2.
More specifically, after a mixture of 100 parts by mass of the lactic acid resin (A), 75 parts by mass of the epoxy silane coupling treatment BF013ST, and 3 parts by mass of the flax plant fiber was dry blended, a sheet having a thickness of 400µm was made by carrying out a method similar to that of the example 1. The flame retardance (UL94V) of the obtained sheet was evaluated. Table 1 shows the result.

### • Example 5

Except that the bamboo fiber produced by OG Corporation was used as the natural fiber (C), a sheet was made by carrying out a method similar to that of the example 2.
More specifically, after a mixture of 100 parts by mass of the lactic acid resin (A), 75 parts by mass of the epoxy silane coupling treatment BF013ST, and 3 parts by mass of the bamboo fiber was dry blended, a sheet having a thickness of 400µm was made by carrying out a method similar to that of the example 1. The flame retardance (UL94V) of the obtained sheet was evaluated. Table 1 shows the result.

### • Example 6

Except that the mixing amount of the kenaf fiber was changed to 10 parts by mass, a sheet was made by carrying out a method similar to that of the example 2.
More specifically, after a mixture of 100 parts by mass of the lactic acid resin (A), 75 parts by mass of the epoxy silane coupling treatment BF013ST, and 10 parts by mass of the kenaf fiber was dry blended, a sheet having a thickness of 400µm was made by carrying out a method similar to that of the example 1. The flame retardance (UL94V) of the obtained sheet was evaluated. Table 1 shows the result.

### • Example 7

Except that the mixing amount of the kenaf fiber was changed to 25 parts by mass, a sheet was made by carrying out a method similar to that of the example 2.
More specifically, after a mixture of 100 parts by mass of the lactic acid resin (A), 75 parts by mass of the epoxy silane coupling treatment BF013ST, and 25 parts by mass of the kenaf fiber was dry blended, a sheet having a thickness of 400µm was made by carrying out a method similar to that of the example 1. The flame retardance (UL94V) of the obtained sheet was evaluated. Table 1 shows the result.

### • Example 8

A sheet made in the example 2 was stretched longitudinally double at 75°C by a roller. Thereafter the sheet was stretched widthwise double at 85°C by the tenter method. In this manner, a stretched film having an average thickness of 100µm was made. The flame retardance (UL94V) of the obtained film was evaluated. Table 1 shows the result.

### • Example 9

After a mixture of 100 parts by mass of the lactic acid resin (A), 75 parts by mass of the epoxy silane coupling treatment BF013ST, and 3 parts by mass of the kenaf fiber was dry blended, the mixture was compounded at 180°C by using a 40mm *φ* small same-direction twin screw extruder manufactured by Mitsubishi Heavy Industries, Ltd. to shape the mixture into a pellet. The obtained pellet was injection molded by using an injection molding machine "IS50E (commercial name)" manufactured by Toshiba Machine Co., Ltd. to obtain a plate having a length of 200mm × a width of 3mm × a thickness of 1mm.
The main injection conditions were as follows:

1) Temperature condition: temperature of cylinder (195°C), temperature of die (40°C)
2) Injection condition: injection pressure (115 MPa), holding pressure (55 MPa)
3) Measuring condition: number of rotations of screw (65 rpm), back pressure (15 MPa)
The flame retardance (UL94V) of each of the obtained plates was evaluated. Table 1 shows the results.

### • Comparison example 1

A sheet having a thickness of 400µm was made by carrying out a method similar to that of the example 1 without adding the metal hydroxide (B) and the fiber (C) to the lactic acid resin (A). The flame retardance (UL94V) of the obtained sheet was evaluated. Table 2 shows the result.

### • Comparison example 2

Although 100 parts by mass of the epoxy silane coupling treatment BF013ST was added to 100 parts by mass of the lactic acid resin (A), the fiber (C) was not added to the lactic acid resin (A). After a mixture was dry blended, a sheet having a thickness of 400µm was made by carrying out a method similar to that of the example 1. The flame retardance (UL94V) of the obtained sheet was evaluated. Table 2 shows the result.

### • Comparison example 3

Although 25 parts by mass of the kenaf fiber was added to 100 parts by mass of the lactic acid resin, the metal hydroxide (B) was not added to the lactic acid resin. After a mixture was dry blended, a sheet having a thickness of 400µm was made by carrying out a method similar to that of the example 1. The flame retardance (UL94V) of the obtained sheet was evaluated. Table 2 shows the result.

### • Comparison example 4

Except that instead of the natural fiber (C), glass fiber produced by Nippon Sheet Glass Co., Ltd. was used, a sheet was made by carrying out a method similar to that of the example 2.
More specifically, after a mixture of 100 parts by mass of the lactic acid resin (A), 75 parts by mass of the epoxy silane coupling treatment BF013ST, and 3 parts by mass of the glass fiber was dry blended, a sheet having a thickness of 400µm was made by carrying out a method similar to that of the example 1. The flame retardance (UL94V) of the obtained sheet was evaluated. Table 2 shows the result.

As apparent from table 1, all of the sheets of the examples 1 through 7 having the thickness of 400µm and the plate (injection molding) of the example 9 having the thickness of 1000µm satisfied the V-0 standard based on the vertical flame test UL94. The film of the example 8 having the thickness of 100µm satisfied the VTM-0 standard based on the vertical flame test (UL94VTM).
Therefore it was confirmed that the resin moldings of the examples 1 through 9 of the present invention had excellent flame retardance and passed the safety standard UL94 irrespective of the thickness of the molding.

On the other hand, the sheets of the comparison examples 1 and 3 were nonstandard in the flame retardance examined based on the UL94 vertical flame test (UL94V). The sheets of the comparison examples 2 and 4 were nonstandard in the V-2 standard.
Therefore it was confirmed that the resin composition in which the metal hydroxide (B) or/and the natural fiber or/and the fiber (C) derived from the natural material are not added to the lactic acid resin (A) is insufficient for using it widely as a flame-retardant material.

### Industrial applicability

The resin composition of the present invention is excellent in its flame retardance and moldability and thus applicable to various moldings. For example, the resin composition can be used as a film, a sheet, flat plate or a stereo-structure plate. The molding of the resin composition of the present invention satisfies the high-level standards for examining the flame retardance provided in the safety standard UL94. Therefore the molding is widely used in various industrial fields for use in household appliances, office automation apparatuses, parts of a car; as packing films for foods, electronic parts, medical appliances, medicines, cosmetics, and the like; a film for agricultural use; a film for protecting industrial products; and as daily goods.

## Claims

1. A resin composition comprising 100 parts by mass of a lactic acid resin (A), 50 to 100 parts by mass of a metal hydroxide (B), and 0.1 to 30 parts by mass of a fiber (C),
wherein said fiber (C) is a natural fiber or/and a fiber derived from a natural material, and
wherein a surface of said metal hydroxide (B) is treated with a silane coupling agent, titanic acid or fatty acid.

2. The resin composition according to claim 1, wherein said metal hydroxide (B) is aluminium hydroxide.

3. An injection molding made of the resin composition according to claim 1 or 2.

4. A molding of the resin composition according to claim 1 or 2, wherein said molding consists of a film, stretched at least in one direction, which has an average thickness less than 200µm; a sheet having an average thickness not less than 200µm and less than 500µm; and a flat plate or a stereo-structure plate having an average thickness not less than 500µm.

5. The molding according to claim 3 or 4, which satisfies a V-0 standard or a VTM-0 standard in a vertical flame test UL94 or UL94V provided in a safety standard UL94.

## Patentansprüche

1. Harz-Zusammensetzung, umfassend 100 Massenteile eines Milchsäureharzes (A), 50 bis 100 Massenteile eines Metallhydroxids (B) und 0,1 bis 30 Massenteile einer Faser (C),
wobei die Faser (C) eine natürliche Faser oder/und eine Faser, die aus einem natürlichen Material stammt, ist, und
wobei eine Oberfläche des Metallhydroxids (B) mit einem SilanKopplungsmittel, Titansäure oder Fettsäure behandelt wird.

2. Harz-Zusammensetzung nach Anspruch 1, wobei das Metallhydroxid (B) Aluminiumhydroxid ist.

3. Spritzgussfrom, hergestellt aus der Harz-Zusammensetzung nach Anspruch 1 oder 2.

4. Formkörper der Harz-Zusammensetzung nach Anspruch 1 oder 2, wobei der Formkörper aus einem Film besteht, der mindestens in eine Richtung gedehnt ist, der eine mittlere Dicke von weniger als 200 µm hat; einer Schicht mit einer mittleren Dicke von nicht weniger als 200 µm und weniger als 500 µm; und einer flachen Platte oder einer Stereostruktur Platte mit einer mittleren Dicke von nicht weniger als 500 µm.

5. Formkörper nach Anspruch 3 oder 4, der einem V-0 Standard oder einem VTM-0 Standard in einem Vertikal-Flammtest UL94 oder UL94V, bereitgestellt in einem Sicherheitsstandard UL94, genügt.

## Revendications

1. Composition de résine comprenant 100 parties en masse d'une résine d'acide lactique (A), 50 à 100 parties en masse d'un hydroxyde métallique (B), et 0,1 à 30 parties en masse d'une fibre (C),
dans laquelle ladite fibre (c) est une fibre naturelle ou/et une fibre dérivée d'une matière naturelle, et
dans laquelle une surface dudit hydroxyde métallique (B) est traitée avec un agent de couplage au silane, un acide de titane ou un acide gras.

2. Composition de résine selon la revendication 1, dans laquelle ledit hydroxyde métallique (B) est un hydroxyde d'aluminium.

3. Moulage par injection réalisé avec la composition de résine selon la revendication 1 ou 2.

4. Moulage de la composition de résine selon la revendication 1 ou 2, dans lequel ledit moulage consiste en un film, étiré au moins dans une direction, qui a une épaisseur moyenne inférieure à 200µm ; une feuille ayant une épaisseur moyenne non inférieure à 200µm et inférieure à 500µm; et une plaque plate ou une plaque à stéréo-structure ayant une épaisseur moyenne non inférieure à 500µm.

5. Moulage selon la revendication 3 ou 4, qui satisfait une norme V-0 ou une norme VTM-0 dans un essai d'inflammabilité verticale UL94 ou UL94V prévu dans une norme de sécurité UL94.
